Europäisches Patentamt

European Patent Office

Office européen des brevets

(19)

(11) EP 0 929 171 A2

(12) **EUROPÄISCHE PATENTANMELDUNG**

(43) Veröffentlichungstag:
14.07.1999 Patentblatt 1999/28

(51) Int. Cl.⁶: **H04L 27/18**, H04B 3/56

(21) Anmeldenummer: 98124841.2

(22) Anmeldetag: 29.12.1998

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 08.01.1998 DE 19800457

(71) Anmelder:
PolyTrax Information Technology AG
82237 Wörthsee-Etterschlag (DE)

(72) Erfinder: Hartl, Wilhelm
80636 München (DE)

(74) Vertreter:
Strehl Schübel-Hopf & Partner
Maximilianstrasse 54
80538 München (DE)

(54) **Datenübertragung auf Stromleitungen mittels Signale koninuierlicher Phase**

(57) Es wird eine Datenübertragungstechnik beschrieben, die störungssicher und schnell ist und sich daher besonders zur Datenübertragung über die Stromleitungen des allgemeinen Stromversorgungsnetzes eignet.

Eine Steuereinheit 1 dient der Ein- und Ausgabe anwendungsspezifischer Daten 2, 8 und ist zum Aussenden eines mit den Daten modulierten Signals über eine Stromleitung 5 mit einem Frequenzsynthesizer 3 und zum Empfang eines ebensolchen Signals von der Stromleitung 5 mit einem Komparator 7 versehen. Die Modulation ist eine Kombination aus Frequenz- und Phasenmodulation, bei der die Phase eines Signalabschnitts einer Frequenz für einen bestimmten Bitwert (0 oder 1) durch dazwischenliegende Signalabschnitte anderer Frequenz für den anderen Bitwert (1 oder 0) so moduliert wird, daß eine einfache Erkennung der Bitwerte beim Empfang anhand dieser Phasenmodulation möglich ist. Außerdem ist der Signalverlauf sehr glatt und oberwellenarm.

FIG.1

# Beschreibung

Die vorliegende Erfindung betrifft ein Verfahren und eine Vorrichtung zum Übertragen digitaler Daten, insbesondere über die Leitung eines Stromversorgungsnetzes.

Für die Datenübertragung beispielsweise bei der Überwachung und Steuerung elektrischer oder elektronischer Geräte und Maschinen, bei Telefonie, E-Mail, Internet-Anschlüssen und anderen Datennetzen werden meist spezielle Datenleitungen verlegt. Wegen des damit verbundenen Aufwands wurden bereits verschiedene Versuche unternommen, die meist ohnehin vorhandenen Stromleitungen des allgemeinen Stromversorgungsnetzes zur Datenübertragung zu nutzen. Die europäische Norm EN 50065 sieht im Bereich von Null bis 148,5 kHz verschiedene Frequenzbänder für die Informationsübermittlung auf dem Stromversorgungsnetz vor. Ähnliche Standards gelten in anderen Ländern.

Konventionelle Systeme zur Datenübertragung auf dem Stromversorgungsnetz erreichen im Rahmen dieser Normen jedoch oft nur Übertragungsgeschwindigkeiten von etwa 1200 bis 2400 Bit pro Sekunde und sind relativ unzuverlässig, da das Stromversorgungsnetz wegen der großen Zahl ständig zu- und wieder abgeschalteter Verbraucher, die verschiedenste Störspannungen erzeugen, erheblich gestört ist.

Digitale Daten lassen sich prinzipiell durch Amplituden-, Frequenz- oder Phasenmodulation einer Tragerwelle übertragen. Die Amplitudenmodulation ist zwar sowohl auf der Sender-, als auch auf der Empfängerseite sehr einfach zu realisieren, ist jedoch besonders anfällig gegen Störungen durch wechselnde Bedampfung des Übertragungsmediums oder Störspannungen. Sie ist daher zur Datenübertragung über das Stromversorgungsnetz kaum geeignet.

Bei der Frequenzmodulation digitaler Daten werden entsprechend den Werten der einzelnen Datenbits zwei unterschiedliche Frequenzen übertragen. Bei der Phasenmodulation wird lediglich eine einzige Frequenz verwendet, deren Phase zwischen Datenbits mit unterschiedlichen Werten sprunghaft verändert wird. Beide Modulationsarten weisen den Nachteil auf, daß die sprunghafte Veränderung der Frequenz bzw. der Phase bei der Modulation digitaler Daten zur Erzeugung erheblicher Oberwellen führt, die als zusätzliche Störungen über das Übertragungsmedium laufen und nutzlos abgestrahlte Senderenergie bedeuten. Außerdem ist zur Demodulation im Empfänger ein erheblicher Aufwand notwendig.

Eine Einführung in die Datenübertragung über das Stromversorgungsnetz ist in K. Dostert, W. Bartel: "Störsichere Datenübertragung auf Stromversorgungsleitungen" in "de - der elektromeister + deutsches elektrohandwerk" 19/1989, auf den Seiten 1349-1354 enthalten. Datenübertragungen auf Stromversorgungsnetzen mit entweder Frequenz- oder Phasenmodulation sind auch in DE-A-4323376, DE-A-4236310, DE-A-4001266, EP-A-365350, EP-A-577861, US-4538136, DE-A-4001265 und DE-C-3626033 angegeben. Eine kombinierte Frequenz- und Phasenmodulation für andere Anwendungsfälle betreffen DE-A-3519408 und DE-A-3828623. Eine Vorrichtung zur Phasenmodulation von Signalen ist in DE-C-3919530 beschrieben.

Keine dieser bekannten Techniken löst die genannten Probleme des plötzlichen Wechsels der Frequenz oder der Phase des modulierten Signals zwischen zwei aufeinanderfolgenden Bits bei der Übertragung digitaler Daten.

Der Erfindung liegt daher die Aufgabe zugrunde, Verfahren und Vorrichtungen zur digitalen Datenübertragung anzugeben, die sehr störunanfällig sind und eine hohe Übertragungsgeschwindigkeit ermöglichen.

Die Lösung dieser Aufgabe gelingt mit den in den Ansprüchen 1 und 12 angegebenen Verfahren bzw. den in den Ansprüchen 14 und 16 angegebenen Vorrichtungen. Die Unteransprüche sind auf vorteilhafte Ausgestaltungen der Erfindung gerichtet.

Das Verfahren bzw. die Vorrichtung nach Anspruch 1 bzw. 14 beruht auf einer Frequenzmodulation, die Datenbits mit unterschiedlichem Wert Signalabschnitte unterschiedlicher Frequenzen zuweist. Zusätzlich gelten die weiteren in den Ansprüchen 1 und 14 angegebenen Bedingungen für die Phasen der Signalabschnitte und die Stetigkeit des Signalverlaufs. Stetigkeit bedeutet nicht nur die mathematische Stetigkeit bei mikroskopischer Betrachtung des Signalverlaufs sondern auch die Abwesenheit von sprunghaften Änderungen des Signalpegels bei Betrachtung des Signalverlaufs im Ganzen.

Insgesamt ergibt sich dadurch ein glatter, oberwellenarmer Signalverlauf und eine Kombination aus Frequenz- und Phasenmodulation. Die Phase der Signalabschnitte einer Frequenz für einen Bitwert (0 oder 1) wird durch dazwischenliegende Signalabschnitte anderer Frequenz für den anderen Bitwert (1 oder 0) so moduliert, daß die Erkennung der Bitwerte beim Empfang anhand dieser Modulation eindeutig und auf einfache und sichere Weise möglich ist. Die Oberwellenarmut bewirkt einen effizienten Einsatz der Senderenergie und reduziert die gegenseitige Störung verschiedener gleichartiger Vorrichtungen, die die gleichen oder benachbarte Frequenzkanäle nutzen. All dies trägt zu einer störunanfälligen Datenübertragung mit hoher Geschwindigkeit bei. Die hohe Geschwindigkeit läßt sich auch zur Übertragung von zusätzlichen Fehlererkennungs- oder Fehlerkorrekturbits nutzen, wodurch die Übertragungssicherheit weiter steigt.

Die Ausgestaltung nach Anspruch 2 ermöglicht ein besonders einfaches Demodulieren der übertragenen Signale. Anspruch 3 betrifft die Übertragung über eine Stromversorgungsleitung.

Die Ansprüche 4 bis 8 geben Ausgestaltungen an, die besonders glatte, oberwellenarme Signale übertragen. Vorteilhafterweise sind die Spitzenamplituden der verschiedenen Signalabschnitte gleich.

Mit der XOR-Verknüpfung der zu übertragenden Daten nach Anspruch 9 mit einer Pseudo-Zufallszahl wird eine weitgehende Gleichverteilung von Bits mit den Werten 0 und 1 in den übertragenen Daten erreicht. Die Berechnung der Pseudo-Zufallszahl aus der ohnehin mitübertragenen Prüfsumme nach Anspruch 10 ermöglicht dem Empfänger, die XOR-Verknüpfung rückgängig zu machen, ohne daß ihm neben der ohnehin übertragenen Prüfsumme die Pseudo-Zufallszahl zusätzlich mitgeteilt werden muß, was die für Nutzdaten zur Verfügung stehende Übertragungskapazität reduzieren würde.

Das Merkmal des Anspruchs 11 ermöglicht stets die maximale Übertragungsgeschwindigkeit bei wechselnden Übertragungsverhältnissen.

Das Merkmal des Anspruchs 13 gestattet die ständige Nachführung der Synchronisation von Sender und Empfänger, beispielsweise zur Korrektur der Quarzdrift bei quarzgetakteten Vorrichtungen.

Die Ausgestaltung nach Anspruch 15 eignet sich insbesondere für Anwendungen, bei denen sehr viele gleichartige Vorrichtungen nach Belieben an das Übertragungsmedium anschließbar sind. Handelt es sich bei dem Übertragungsmedium um eine Leitung, so läßt sich die Senderendstufe in Pausen zwischen einzelnen Datenübertragungen vorteilhafterweise in einen Zustand erhöhter Impedanz zur Leitung schalten, um diese möglichst wenig zu bedämpfen.

Einfache Verfahren bzw. Vorrichtungen zum Empfang der wie beschrieben modulierten Signale sind in den Ansprüchen 12 und 16 angegeben. Sie kommen ohne analoge Kreise wie PLLs aus, die aufwendig zu fertigen wären und eine lange Einschwingzeit benötigen. Auch dadurch wird auf einfache Weise eine hohe Übertragungsgeschwindigkeit sichergestellt.

Ein bevorzugtes Ausführungsbeispiel der Erfindung wird im folgenden anhand der Zeichnungen erläutert. Darin zeigen

> **Figur 1** eine Vorrichtung zum Übertragen von Daten über eine Stromversorgungsleitung, und
> **Figuren 2** bis **6** verschiedene Signalformen, die in der Vorrichtung der Figur 1 auftreten.

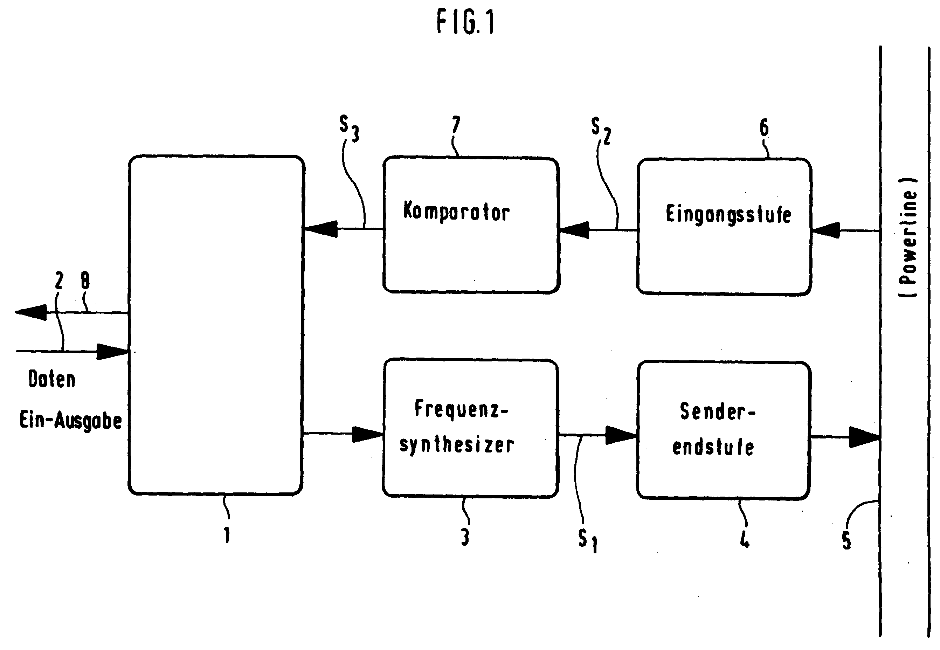

Die in Figur 1 dargestellte Vorrichtung zur Übertragung von Daten über eine Stromversorgungsleitung (powerline) weist eine Steuereinheit 1 auf, in die die zu übertragenden anwendungsspezifischen Daten 2 eingegeben werden können. Zum Aussenden der Daten ist die Steuereinheit 1 über einen Frequenzsynthesizer 3 und eine Senderendstufe 4 mit der Stromversorgungsleitung 5 gekoppelt. Wie mit Bezug auf die folgenden Figuren im einzelnen beschrieben wird, steuert die Steuereinheit 1 den Frequenzsynthesizer 3 aufgrund der eingegebenen anwendungsspezifischen Daten 2 zur Ausgabe bestimmter modulierter Signale S1 an. Die Senderendstufe 4 verstärkt die Signale S1 und überlagert sie der Netzspannung auf der Stromversorgungsleitung 5. Außerdem dient die Senderendstufe 4 der Trennung der Vorrichtung von der Netzspannung.

Zum Empfang von anwendungsspezifischen Daten, die von einer anderen gleichartigen Vorrichtung über die Stromversorgungsleitung 5 übertragen werden, ist die Steuereinheit 1 mit der Stromversorgungsleitung 5 außerdem über eine Eingangsstufe 6 und einen Komparator 7 verbunden. Wie weiter unten im einzelnen erläutert wird, gewinnt die Eingangsstufe 6 das die anwendungsspezifischen Daten enthaltende modulierte Signal S2 durch Verstärken und Filtern aus den Spannungen auf der Stromversorgungsleitung 5 und übergibt es dem Komparator 7, der es digitalisiert und als Rechtecksignal S3 an die Steuereinheit 1 weitergibt. Die Steuereinheit 1 demoduliert das Rechtecksignal S3 und gibt die darin enthaltenen anwendungsspezifischen Daten 8 aus.

Im folgenden wird die Modulation des über die Stromversorgungsleitung 5 zu übertragenden Signals S1 mit den übertragenen Datenbits beschrieben. Aufgrund weiter unten näher erläuterter Datencodierungstechniken müssen die zur Modulation verwendeten, also physikalisch übertragenen Datenbits nicht mit den Bits der anwendungsspezifischen Daten 2 übereinstimmen. Im folgenden werden die physikalischen Bits daher je nach ihrem Wert (0 oder 1) mit P'0' und P'1' bezeichnet.

Zum Aussenden eines physikalischen Bits P'1' mit dem Wert 1 steuert die Steuereinheit 1 den Frequenzsynthesizer 3 so an, daß dieser einen Abschnitt des Signals S1 mit 4,25 sinus- bzw. cosinusförmigen Schwingungen der Frequenz

$$F1 = 114583{,}3333 \text{ Hz}$$

ausgibt. Die Dauer dieses Signalabschnitts beträgt also 37,1 µs. Vom Anfang bis zum Ende dieses Signalabschnitts verschiebt sich die Phasenlage (der Phasenwinkel) des Signals S1 dabei um 0,25 Schwingungen, also um 90°.

Zur Ausgabe eines physikalischen Bits mit dem Wert 0, also des Bits P'0', steuert die Steuereinheit 1 den Frequenzsynthesizer 3 so an, daß dieser einen Abschnitt des Signals S1 mit 4,50 sinus- bzw. cosinusförmigen Schwingungen der Frequenz

$$F2 = 121323{,}5294 \text{ Hz}$$

ausgibt. Die Dauer dieses Signalabschnitts beträgt daher ebenfalls 37,1 µs. Die Differenz der Phasenlagen zu Beginn und zum Ende dieser Zeit beträgt 0,50 Schwingungen, also 180°.

Die beiden Frequenzen F1 und F2 liegen innerhalb des Frequenzbands von 95 kHz bis 125 kHz der EN 50065.

Entsprechend dem zu übertragenden Strom physikalischer Bits steuert die Steuereinheit 1 den Frequenzsynthesizer 3 so an, daß sich die genannten Signalabschnitte unmittelbar aneinander anschließen. Aus der Dauer von 37,1 μs pro physikalischem Bit ergibt sich eine Datentransferrate von 26960 physikalischen Bits pro Sekunde.

Der Frequenzsynthesizer 3 verändert beim Wechsel von einem zum anderen Signalabschnitt die Phasenlage des erzeugten Signals S1 nicht: Jeder Signalabschnitt beginnt mit der Phasenlage, in der der vorausgegangene Signalabschnitt geendet hat.

In den folgenden Figuren sind Signalabschnitte der Frequenz F1, entsprechend dem physikalischen Bit P'1', mit durchgezogenen Linien und solche der Frequenz F2, entsprechend dem physikalischen Bit P'0', mit gestrichelten Linien dargestellt.

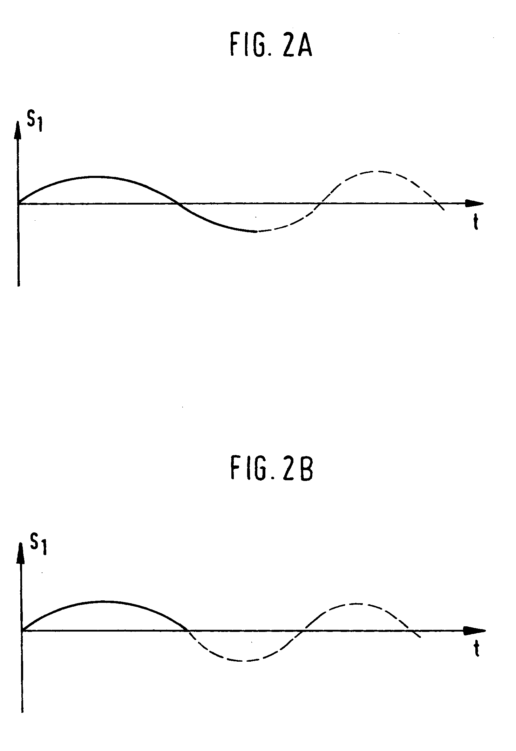

Figur 2a zeigt den zeitlichen Verlauf des Signals S1 beim Übergang von einem Abschnitt mit F1 zu einem Abschnitt mit F2 in einem Extremalpunkt der Schwingung. Da beide Abschnitte die gleiche Amplitude aufweisen, ist das Signal S1 am Übergang stetig. Ebenso ist seine erste zeitliche Ableitung stetig.

Figur 2b zeigt einen ebensolchen Übergang in einer Nullstelle des Signals S1. Hier ist lediglich das Signal S1 selbst, nicht jedoch dessen zeitliche Ableitung, stetig.

Bei den gewählten Frequenzen und Dauern der Signalabschnitte können Übergänge sowohl in den Extremalpunkten als auch in den Nullstellen auftreten. Weniger Oberwellen sind im Signal S1 dann enthalten, wenn lediglich Übergänge in den Extremalstellen vorhanden sind, wo auch die erste zeitliche Ableitung stetig ist. Dies kann durch eine Änderung des vorliegenden Ausführungsbeispiels erreicht werden, bei der jeder Signalabschnitt nicht nur eine einzige Frequenz, sondern Unterabschnitte verschiedener Frequenzen aufweist, die sich jeweils an ihren Extremalpunkten aneinander anschließen und über die Dauer des Signalabschnitts von beispielsweise 37,1 μs eine Phasendifferenz von 0 bzw. 180° anstelle von 90° bzw. 180° ergeben.

Die von einer anderen gleichartigen Vorrichtung über die Stromversorgungsleitung 5 übertragenen Signale werden von der Eingangsstufe 6 gefiltert, um sie von der Netzspannung auf der Stromversorgungsleitung zu trennen. Das auf diese Weise erhaltene Signal S2 gleicht bei ungestörter Übertragung dem ausgesandten modulierten Signal S1. Das Signal S2 wird vom Komparator 7 durch Vergleich mit dem Spannungswert Null in ein Rechtecksignal S3 umgewandelt, dessen Flanken den Nulldurchgängen des Signals S2 entsprechen.

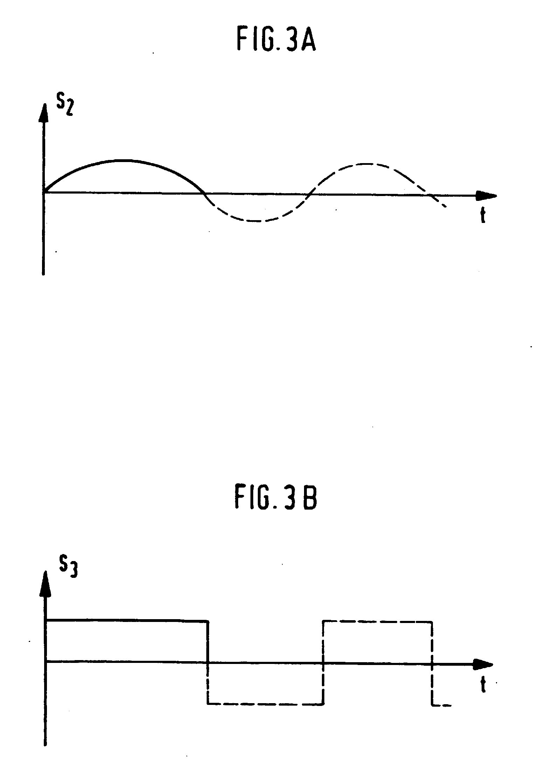

Figur 3a zeigt ein Beispiel des Signals S2, das dem Signal S1 in Figur 2b gleicht, und Figur 3b zeigt das vom Komparator 7 daraus gebildete Rechtecksignal S3. Das Rechtecksignal S3 wird der Steuereinheit 1 zugeführt, die es digital erfaßt.

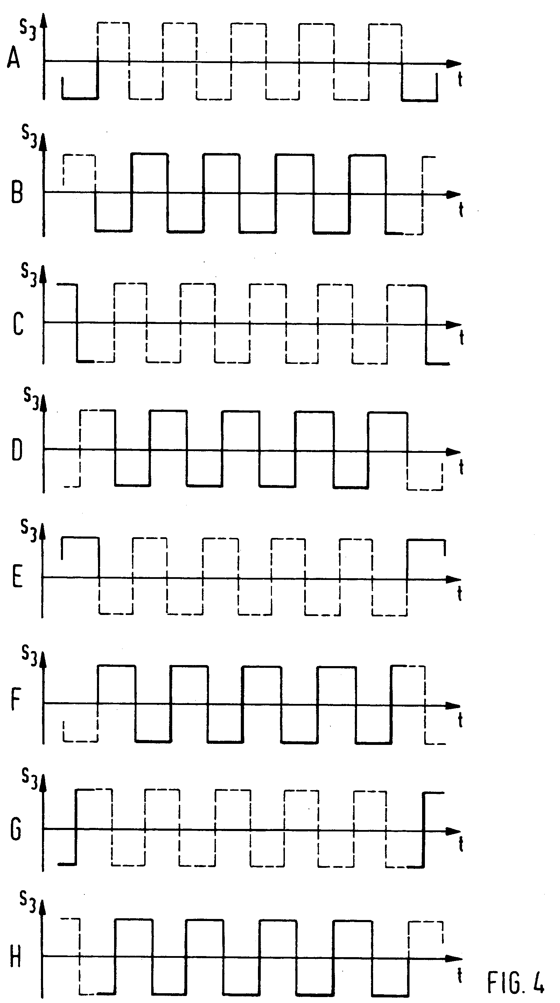

Die Figuren 4a bis 4h zeigen alle acht Möglichkeiten für das Rechtecksignal S3 bei der Übertragung eines Bits P'0' zwischen zwei Bits P'1' und für das Bit P'1' zwischen zwei Bits P'0'. Die acht Möglichkeiten ergeben sich durch die acht möglichen Übergänge zwischen Signalabschnitten der Frequenz F1 und solchen der Frequenz F2 im positiven oder im negativen Extremalpunkt oder im Nulldurchgang der positiven oder der negativen Flanke.

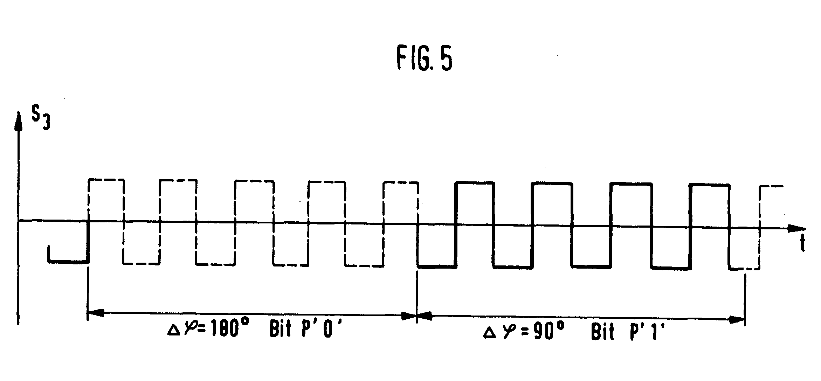

Figur 5 zeigt ein weiteres Beispiel des Verlaufs des Signals S3 für ein Bit P'0', gefolgt von einem Bit P'1'. Die Differenz Δφ der Phasenlagen am Anfang und am Ende des Bits P'0' beträgt 180°. Die entsprechende Differenz beim Bit P'1' beträgt 90°.

Im folgenden wird das Erzeugen der physikalischen Bits aus den eingegebenen anwendungsspezifischen Daten 2 durch die Steuereinheit 1 einer sendenden Vorrichtung (im folgenden "Sender") und das Demodulieren des Rechtecksignals S3 sowie das Erzeugen der ausgegebenen anwendungsspezifischen Daten 8 durch die Steuereinheit 1 einer empfangenden Vorrichtung ("Empfänger") genauer beschrieben.

Daten werden in Form von Datenpaketen übertragen, die von der Steuereinheit 1 des Senders zusammengestellt werden. Ein Datenpaket enthält einen Vorlauf und daran anschließend Nutzdaten, die die anwendungsspezifischen Daten 2, 8 beinhalten.

Die physikalischen Bits P'0' und P'1' werden wahlweise mittels einer der folgenden drei Datencodierungstechniken aus den als logische Bits L'0' und L'1' bezeichneten Bits des Vorlaufs und der Nutzdaten gebildet:

(1) Das logische Bit ist mit dem physikalischen Bit identisch:

L'0' = P'0' und L'1' = P'1'.

(2) Ein logisches Bit wird durch zwei physikalische Bit dargestellt ("Biphasencodierung"):

L'0' -> B'0' = P'01' und L'1' -> B'1' = P'10'.

(3) Ein logisches Bit wird durch drei physikalische Bit dargestellt ("Triphasencodierung"):

L'0' -> T'0' = P'001' und L'1' -> T'1' = P'110'.

Der Vorlauf existiert in zwei Varianten, dem Kurzvorlauf für den Fall guter Übertragungsbedingungen und dem sehr fehlertoleranten Langvorlauf für schwierige Übertragungsbedingungen.

Der Kurzvorlauf für den Fall guter Übertragungsbedingungen besteht aus drei Teilen:

(1) 32 * P'1'. Diese 32 physikalischen Bit werden gesendet, um die Hochfahrzeit der Senderendstufe 4 zu überbrücken, bis ein stabiler Sendezustand erreicht ist. Das vorliegende Ausführungsbeispiel ist nämlich so ausgelegt, daß es sich gegenüber der Stromversorgungsleitung 5 elektrisch möglichst neutral verhält. Dazu wird die Senderendstufe 4 mit ihren Induktivitäten nur zum Senden hochgefahren, ansonsten verbleibt sie inaktiv. Diese Vorgehensweise ist insbesonders in Netzen mit mehreren Teilnehmern von Bedeutung, weil ansonsten durch die Vielzahl von Induktvitäten an der Stromversorgungsleitung 5 eine erhebliche Beeinträchtigung der Übertragungsqualität zu erwarten ist.

(2) 39 * B'0' = 39 * P'01'. Diese 39 physikalischen 01-Bit-folgen erlauben dem Empfänger, Bitanfang und Bitende optimal festzustellen. Damit kann sich der Empfänger wie weiter unten beschrieben auf den physikalischen Bitstrom synchronisieren.

(3) 6 * T'1' = 6 * P'110'. Diese Bitfolge dient dazu, dem Empfänger mitzuteilen, daß ein Kurzvorlauf vorliegt, der mit eben dieser Bitfolge abgeschlossen wird. Es folgt nun unmittelbar das erste Byte des Nutzdatenbereichs.

Der Langvorlauf für schlechte Übertragungsbedingungen besteht aus vier Teilen:

(1) Der erste Teil ist genauso wie beim Kurzvorlauf.
(2) 67 * B'0' = 67 * P'01'. Dieser Teil hat die gleiche Funktion wie der zweite Teil beim Kurzvorlauf. Es wird lediglich die 01-Bitfolge öfters wiederholt, um dem Empfänger im Falle von Störungen mehr Chancen zu geben, sich physikalisch zu synchronisieren.
(3) 1 * T'000 001 010 011 100 101 110 111'. Diese acht mit Triphase codierten Dreibitgruppen stellen die Binärzahlen von 0 bis 7 in aufsteigender Reihenfolge dar. Dadurch erhält der Empfänger die Chance, wie weiter unten beschrieben auch bei erheblichen Störungen mit hoher Wahrscheinlichkeit die aktuelle Position im Vorlauf festzustellen und sich auf den Bitstrom zu synchronisieren.
(4) T'000 000' oder T'000 111' oder T'111 000'. Diese jeweils zwei mit Triphase codierten Dreibitgruppen enthalten die Information, wie die Nutzdaten verschlüsselt sind:

T'000 000' bedeutet, daß die Nutzdaten mit einem Fehlerkorrektur-Algorithmus (beispielsweise dem Hagelbarger-Verfahren) so verschlüsselt werden, daß es am Empfänger möglich ist, verfälschte Daten zu erkennen und vorzugsweise auch viele Verfälschungen automatisch zu korrigieren. Das Hagelbarger-Verfahren kann nicht nur Einbitfehler sondern auch viele Formen von Mehrbit- oder Clusterfehlern korrigieren. Es erzeugt zu jedem Datenbit ein Fehlerinformationsbit, sodaß sich die Menge der physikalisch zu übertragenden Daten verdoppelt.

T'000 111' bedeutet, daß die Nutzdaten nicht nur über das Hagelbarger-Verfahren verschlüsselt werden, sondern daß anschließend zusätzlich der bereits verschlüsselte Datenstrom noch mit Triphase codiert wird. Dadurch wird hier die Menge der physikalisch zu übertragenden Daten versechsfacht aber die Sicherheit der Datenübertragung wird nochmals erheblich gesteigert.

T'111 000' bedeutet, daß die Nutzdaten mit Triphase codiert sind. Dieser Fall ist von Interesse, um beispielsweise Störungsprobleme auf dem Netz zu analysieren.

Mit dieser Information zur Verschlüsselung der Nutzdaten ist das Ende des Langvorlaufs erreicht, anschließend kommt unmittelbar das erste Byte der Nutzdaten.

Die Nutzdaten gliedern sich in die nachfolgenden vier Teilabschnitte:

(1) Das Startbyte, zum Beispiel P'0101 1010'. Der Sinn des Startbytes besteht darin, eine - zwar im höchsten Maße unwahrscheinliche, aber keineswegs völlig unmögliche Fehlsynchronisation möglichst sofort zu erkennen.
(2) Eine biphasencodierte 48 Bit lange Prüfsumme. Die Prüfsumme wird aus den folgenden Teilabschnitten (3) und (4) über ein einfach zu handhabendes Divisionsrestverfahren errechnet: Die Prüfsumme stellt den Rest bei Division der 257 Byte langen Folge der Teilabschnitte (3) und (4) durch eine 48-Bit Primzahl dar. Dann wird die Prüfsumme per Biphase codiert und beansprucht im vorliegenden Teilabschnitt (2) der Nutzdaten daher 12 Byte. Der Grund der Codierung mit Biphase wird aus der weiteren Erläuterung in kürze deutlich werden.
(3) Ein Längenbyte, das die Länge des Teilabschnittes (4) enthält.
(4) Die anwendungsspezifischen Daten 2 mit einer maximalen Länge von 256 Byte.

Vor dem Senden werden die Teilabschnitte (3) und (4) mit einer aus der 48-Bit Prüfsumme errechneten Pseudozufallszahl XOR-verknüpft. (Die Berechnung geschieht hier einfach durch Biphasencodierung: Die Pseudozufallszahl besteht aus der biphasencodierten Prüfsumme, Teilabschnitt (2).) Dadurch wird in dem physikalischen Bitstrom eine möglichst ausgewogene Verteilung von P'0' und P'1' erreicht. Dies ermöglicht dem Empfänger, trotz des sogenannten "Quarzdriftproblems" auf Bitanfang und Ende im physikalischen Bitstrom synchronisiert zu bleiben. Das Problem der Quarzdrift besteht darin, daß Sender und Empfänger zur Steuerung ihrer Zeitabläufe quarzgetaktet sind, Quarze jedoch keineswegs absolut frequenzgenau sind. Das konnte unter schlechten Verhältnissen zur Folge haben, daß der Empfangstakt so weit vom Sendetakt wegläuft, daß während des Empfangs von Daten die Synchronisation auf den Bitstrom verlorenging, was üblicherweise bedeutete, daß das aktuelle Datenpaket verloren war. Eine Quarzdrift zu erkennen und sie per Nachsynchronisation zu kompensieren, ist daher wie unten beschrieben eine Funktion des Empfängers.

Die Steuereinheit 1 des Empfängers leistet:

1.) die physikalische und logische Synchronisation des Empfängers auf ein einlaufendes Datenpaket, und

2.) das Einlesen und Decodieren der Nutzdaten sowie die Kontrolle auf Datenfehler innerhalb der Nutzdaten durch erneute Berechnung der Prüfsumme und Vergleich mit der empfangenen Originalprüfsumme.

Die Wahrscheinlichkeit, daß fehlerbehaftete Nutzdaten nicht als fehlerhaft erkannt werden, ist aufgrund der 48 Bit langen Prüfsumme mit $1 : 2^{48}$, also etwa $3,5 * 10^{-15}$ gegeben. Dies bedeutet statistisch, daß im schlechtesten Fall bei einer ununterbrochenen Punkt-zu-Punkt-Verbindung etwa alle neunzigtausend Jahre eine unerkannte fehlerhafte Datenübertragung eintritt.

Die physikalische Synchronisation auf ein Datenpaket bedeutet festzustellen, wo im Vorlauf ein Bit beginnt und endet. Der Empfänger sucht dazu die in Figur 4 und 5 dargestellten Signalformen in der P'...010101...'-Bitfolge in Teil (2) des Vorlaufs.

Nachdem bekannt ist, wo ein Bit (zeitlich) beginnt und endet, erfolgt die logische Synchronisation, d.h. die Feststellung der Position im Vorlauf, um genau dessen Ende und den Beginn der Nutzdaten erkennen zu können.

Dazu wird Bit für Bit des Vorlaufs eingelesen. Bei einem Kurzvorlauf kommt es dann zu der physikalischen Bitfolge

P'... 0101 0101 0101 110 110 110 110 110 110'.

Aufgrund der darin enthaltenen zuletzt eingelesenen Triphasenbits T'111111' erkennt der Empfänger den Abschluß eines Kurzvorlaufs und weiß damit auch, daß die Nutzdaten weder mit Hagelbarger noch mit Triphase, noch mit Hagelbarger und Triphase codiert sind. Anschließend folgt unmittelbar das erste Bit des zu den Nutzdaten gehörenden Startbytes.

Ein mit Triphase codierter Datenstrom ist hier immun gegen Einzelbitfehler mit einem Minimalabstand von mindestens drei Bit. Denn es wird immer über einen Mehrheitsentscheid festgestellt, welchen Wert ein Triphasenbit hat: Der Wert ist T'0' oder T'1', je nachdem ob mehr physikalische Bits mit den korrekten Bitwerten P'001' für T'0' oder P'110' für T'1' übereinstimmen. Da sich ein Triphasenbit aus drei physikalischen Bit zusammensetzt, müssen mindestens zwei dieser physikalischen Bit verfälscht/invertiert sein, um ein Triphasenbit falsch zu erkennen.

Beim Vorliegen eines Langvorlaufs erfolgt die physikalische Synchronisation im Regelfall wie beim Kurzvorlauf innerhalb des zweiten Vorlaufabschnittes. Der Empfänger liest dann bei der logischen Synchronisation folgende physikalische Bitfolge:

P'... 0101 0101 0101'

gefolgt von:

P'001 001 001          001 001 110        001 110 001        001 110 110        110 001 001 110 001 110        110 110 001        110 110 110'

(nämlich dem dritten Abschnitt des Langvorlaufs, in Triphasenschreibweise: T'000 001 010 011 100 101 110 111')

gefolgt von:    P'001 001 001       001 001 001'
oder:             P'001 001 001       110 110 110'
oder:             P'110 110 110       001 001 001'.

Aufgrund der Triphasencodierung, kombiniert mit der Struktur einer arithmetischen Reihe - den Binärzahlen von 0 bis 7 - ist es auch bei erheblichen Verfälschungen des Datenstroms noch möglich, die Vorlaufstruktur zu erkennen und dadurch die aktuelle Position innerhalb des Langvorlaufs zu identifizieren, was eine erfolgreiche logische Synchronisation zur Folge hat.

In Fällen, in denen sich die physikalische Synchronisation aber erst im dritten Abschnitt des Langvorlaufs vollzieht, ist immer noch die logische Synchronisation möglich, falls noch ausreichend Vorlaufdaten in diesem dritten Abschnitt zur Verfügung stehen.

Der vierte Abschnitt des Langvorlaufs enthält die Information, wie die Nutzdaten zu decodieren sind - in der Triphasenschreibweise:

Hagelbarger-Codierung: T'000 000'
Hagelbarger- und Triphasencodierung: T'000 111'
Triphasencodierung: T'III 000'

Diese Information bezüglich der Art der Codierung der Nutzdaten ist hochredundant, da nur die Dreibitgruppen T'000' und T'III' verwendet werden. Daher kann in jeder dieser Dreiergruppen ein Triphasenbit verfälscht sein (mit jeweils zwei oder drei invertierten physikalische Bits), dennoch erzeugt die Strategie der Mehrheitsentscheidung immer ein richtiges Ergebnis. Zusätzlich kann noch in jedem anderen Triphasenbit eines der physikalischen Bits verfälscht sein - wie bereits weiter oben erklärt, werden diese Einbitfehler ebenfalls durch Mehrheitsentscheidung eliminiert.

Nachdem der Vorlauf verarbeitet worden ist, beginnt der Empfänger mit dem Einlesen und Decodieren der Nutzdaten entsprechend der zuvor erhaltenen Information zur Codierung und unter Berücksichtigung der Längeninformation, die in den Nutzdaten als dritter Teilabschnitt zur Verfügung steht. Dabei wird als erstes das Startbyte überprüft, um eine eventuelle Fehlsynchronisation sofort festzustellen. Dadurch ist die Möglichkeit gegeben, wenn nötig ohne Zeitverzug den nächsten Synchronisationsversuch zu starten.

Abschließend wird aus den empfangenen Daten - genauso wie zuvor am Sender - die jetzt aktuelle Prüfsumme errechnet und mit der Originalprüfsumme, die in den Empfangsdaten enthalten ist, verglichen. Falls die beiden Prüfsummen übereinstimmen, so kann mit einer sehr hohen Wahrscheinlichkeit davon ausgegangen werden, daß das Datenpaket korrekt empfangen wurde.

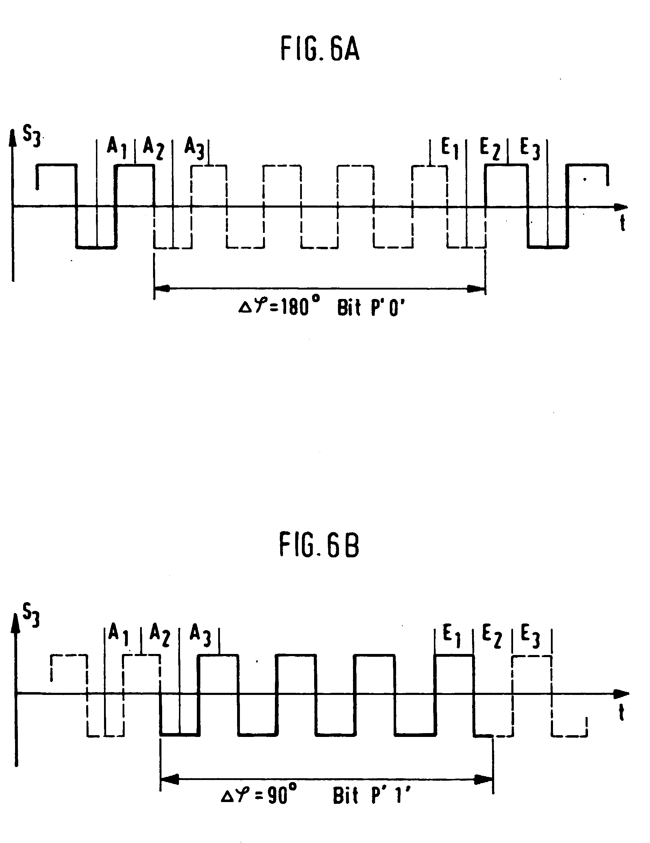

Die Figuren 6a und b stellen an zwei Beispielen die Erkennung eines physikalischen Bits durch die Steuereinheit 1 des Empfängers nach erfolgter physikalischer Synchronisation und die dabei durchgeführte Nachsynchronisation zur Kompensation der Quarzdrift dar.

Die Phasenlage des Signals S3 wird dreimal zu Beginn jedes physikalischen Bits, nämlich in den kurzen Zeitspannen A1 bis A3 und dreimal zum Ende des physikalischen Bits, nämlich in den kurzen Zeitspannen E1 bis E3 abgetastet. Aus der Differenz $\Delta\varphi$ der Phasenlagen in A1 und E1 wird erschlossen, ob das dazwischenliegende Bit P'0'($\Delta\varphi \approx 180°$) oder P'1' ($\Delta\varphi \approx 90°$) sein könnte. Ebenso wird mit A2 und E2 sowie mit A3 und E3 verfahren. Aus den so erschlossenen drei Werten für das dazwischenliegende Bit wird per Mehrheitsentscheid der endgültige Wert für das physikalische Bit bestimmt: Wenn mehr als die Hälfte der erschlossenen drei Werte 1 ist, erhält das physikalische Bit den Wert P'1', und wenn mehr als die Hälfte der erschlossenen drei Werte 0 ist, erhält das physikalische Bit den Wert P'0'. Statt drei Werten kann eine andere ungerade Zahl verwendet werden.

Wird dabei festgestellt, daß der Bitwert aus den anfänglichen Abtastungen zu A1 und E1 statistisch gemittelt eher mit dem Ergebnis des Mehrheitsentscheids übereinstimmt als der Wert aus den letzten Abtastungen zu A3 und E3 oder den mittleren Abtastungen A2 und E2, so werden die zukünftigen Abtastzeitpunkte etwas vorverlegt (z.B. etwa um die halbe Zeit der Zeitspanne A1). Dagegen werden die zukünftigen Abtastzeitpunkte etwas später gelegt, wenn der Bitwert aus den letzten Abtastungen A3 und E3 statistisch eher mit dem Ergebnis des Mehrheitsentscheids übereinstimmt als der Wert aus den anfänglichen Abtastungen A1 und E1 oder den mittleren Abtastung A2 und E2.

Dadurch wird die physikalische Synchronisation zwischen Sender und Empfänger aufrechterhalten und dem Problem der Quarzdrift begegnet. Dieses Verfahren eignet sich beispielsweise auch dazu, während des Vorlaufs die physikalische Synchronisation überhaupt erst herzustellen.

Die in Verbindung mit dem bevorzugten Ausführungsbeispiel genannten Zahlenwerte stellen lediglich Beispiele vorteilhafter Werte dar. Eine weitere Erhöhung der Übertragungsgeschwindigkeit läßt sich durch Verkürzen der einzelnen Signalabschnitte oder durch die Wahl höherer Frequenzen erzielen. Bei Nutzung verschiedener Frequenzkanäle ist auch die gleichzeitige Kommunikation zwischen vielen Vorrichtungen, beispielsweise in einem Multiprozessorsystem möglich. Allgemein eignet sich die Erfindung beispielsweise für die Überwachung und Steuerung elektrischer oder elektronischer Geräte und Maschinen, für Telefonie, E-Mail, Internet-Anschlüsse und andere Datennetze.

## Patentansprüche

1. Verfahren zum Übertragen von digitalen Daten mittels eines Signals (S1), wobei:

   für ein Bit mit dem Wert 0 in den zu übertragenden Daten ein Signalabschnitt einer ersten Frequenz und für ein Bit mit dem Wert 1 ein anderer Signalabschnitt einer von der ersten Frequenz verschiedenen zweiten Frequenz erzeugt werden,
   sich die Differenz der Phasenlagen des einen Signalabschnitts zu seinem Beginn und seinem Ende von der Differenz der Phasenlagen des anderen Signalabschnitts zu seinem Beginn und seinem Ende unterscheidet, und
   für aufeinanderfolgende Bits die entsprechenden aufeinanderfolgenden Signalabschnitte jeweils stetig aneinander anschließend erzeugt werden.

2. Verfahren nach Anspruch 1, wobei die Dauer des einen Signalabschnitts gleich der Dauer des anderen Signalabschnitts ist.

3. Verfahren nach Anspruch 1 oder 2, wobei das Signal mit den genannten Signalabschnitten über eine Stromversorgungsleitung (5) eines Stromversorgungsnetzes ausgesandt wird.

4. Verfahren nach einem der Ansprüche 1 bis 3, wobei für aufeinanderfolgende Bits die Phasenlage am Ende eines vorausgehenden Signalabschnitts gleich der Phasenlage zu Beginn eines daran anschließenden Signalabschnitts ist.

5. Verfahren nach einem der Ansprüche 1 bis 4, wobei die zeitliche Ableitung der aneinander anschließenden Signalabschnitte stetig ist.

6. Verfahren nach Anspruch 5, wobei sich die Signalabschnitte in ihren Extremalpunkten aneinander anschließen.

7. Verfahren nach Anspruch 5 oder 6, wobei der genannte eine und/oder der genannte andere Signalabschnitt aus aufeinanderfolgenden Unterabschnitten unterschiedlicher Frequenz aufgebaut ist, die sich jeweils in ihren Extremalpunkten aneinander anschließen.

8. Verfahren nach einem der Anschlüsse 1 bis 7, wobei die Signalabschnitte sinus- oder cosinusförmig sind.

9. Verfahren nach einem der Ansprüche 1 bis 8, wobei zu übertragende Daten vor der Übertragung einer XOR-Verknüpfung mit einer Pseudo-Zufallszahl unterworfen werden.

10. Verfahren nach Anspruch 9, wobei die Pseudo-Zufallszahl nach einem vorbestimmten Rechenverfahren aus einer ebenfalls übertragenen Prüfsumme der zu übertragenden Daten gewonnen wird.

11. Verfahren nach einem der Ansprüche 1 bis 10, wobei zu übertragende Daten vor der Übertragung zur Erhöhung der Fehlersicherheit kodiert werden und die Kodierung dynamisch der Fehlerhäufigkeit angepaßt wird.

12. Verfahren zum Empfang von digitalen Daten, die mittels eines modulierten Signals übertragen wurden, wobei

das modulierte Signal empfangen wird,
das empfangene Signal in ein Rechtecksignal (S3) umgewandelt wird,
das Rechtecksignal mit einer Folge aus einer ungeraden Anzahl an Abtastvorgängen (A1, A2, A3) kurz hintereinander abgetastet wird, um die Phasenlage des Rechtecksignals festzustellen,
das Rechtecksignal nach etwa einer Zeit, die der Übertragung eines Bits der Daten entspricht, erneut mit einer Folge aus einer ungeraden Anzahl an Abtastvorgängen (E1, E2, E3) kurz hintereinander abgetastet wird, um erneut die Phasenlage des Rechtecksignals festzustellen, und
aus der Differenz der so festgestellten Phasenlagen und aufgrund einer Mehrheitsentscheidung der Wert des zwischen den Abtastfolgen übertragenen Bits erschlossen wird.

13. Verfahren nach Anspruch 12, wobei abhängig davon, ob die jeweils ersten oder letzten Abtastvorgänge innerhalb einer Folge häufiger dem Ergebnis der Mehrheitsentscheidung entsprechen, die Zeitpunkte zukünftiger Abtastvorgänge etwas vor- oder etwas zurückverlegt werden, um Sender und Empfänger zu synchronisieren.

14. Vorrichtung zum Übertragen von digitalen Daten mittels eines Signals (S1), aufweisend:

einen Frequenzsynthesizer (3) um für ein Bit mit dem Wert 0 in den zu übertragenden Daten einen Signalabschnitt einer ersten Frequenz und für ein Bit mit dem Wert 1 einen anderen Signalabschnitt einer von der ersten Frequenz verschiedenen zweiten Frequenz zu erzeugen, und
eine Steuereinheit (1) die den Frequenzsynthesizer so ansteuert, daß sich die Differenz der Phasenlagen des einen Signalabschnitts zu Beginn und Ende dieses Abschnitts von der Differenz der Phasenlagen des anderen Signalabschnitts zu Beginn und Ende des genannten anderen Abschnitts unterscheidet, und für aufeinanderfolgende Bits die entsprechenden aufeinanderfolgenden Signalabschnitte jeweils stetig aneinander anschließend erzeugt werden.

15. Vorrichtung nach Anspruch 14, aufweisend:

eine mit dem Frequenzsynthesizer (3) gekoppelte Senderendstufe (4) zur Übermittlung des Signals mit den genannten Signalabschnitten an ein Übertragungsmedium (5), wobei die Senderendstufe dann, wenn keine Übermittlung stattfindet, in einen Zustand schaltbar ist, in dem andere Datenübertragungen auf dem Übertragungsmedium nicht behindert werden.

16. Vorrichtung zum Empfang von digitalen Daten, die mittels eines modulierten Signals übertragen wurden, aufweisend:

einen Empfänger (6) zum Empfang des Signals,
einen Komparator (7) zur Umwandlung des empfangenen Signals in ein Rechtecksignal (S3), und
eine Steuereinheit (1) um den Pegel des Rechtecksignals mit einer ungeraden Anzahl an Abtastvorgängen kurz hintereinander abzutasten und so die Phasenlage des Rechtecksignals festzustellen, das Rechtecksignal nach etwa einer Zeit, die der Übertragung eines Bits der Daten entspricht, erneut mit einer ungeraden Anzahl an Abtastvorgängen kurz hintereinander abzutasten, um erneut die Phasenlage des Rechtecksignals festzustellen, und aus der Differenz der beiden festgestellten Phasenlagen und aufgrund einer Mehrheitsentscheidung den Wert des dazwischen übertragenen Bits zu erschließen.

# FIG.1

Doten
Ein-Ausgabe

Komparator

Eingangsstufe

Frequenzsynthesizer

Senderendstufe

( Powerline )

EP 0 929 171 A2

FIG. 2A

FIG. 2B

# FIG. 3A

# FIG. 3 B

FIG. 4

FIG. 5

## FIG. 6A

$\triangle \mathcal{Y} = 180°$   Bit P' 0'

## FIG. 6B

$\triangle \mathcal{Y} = 90°$   Bit P' 1'